# FASCICULE DE BREVET EUROPEEN

(11) **EP 1 700 768 B1**
(45) Date de publication et mention de la délivrance du brevet: **15.04.2009**
(21) Numéro de dépôt: 06110443.6
(22) Date de dépôt: 27.02.2006
(51) Int. Cl.: B62B 7/08

(54) **Voiture d'enfant à chassis pliant**
Kinderwagen mit faltbarem Rahmen
Stroller with foldable frame

(30) Priorité: 24.06.2005 FR 0506481; 08.03.2005 FR 0502331
(43) Date de publication de la demande: 13.09.2006
(73) Titulaire: DOREL FRANCE SA, 49309 Cholet (FR)
(72) Inventeur: Ageneau, Laurent, 44210, Pornic (FR)
(74) Mandataire: Bioret, Ludovic

(56) Documents cités:
- EP-A- 0 474 537
- EP-A1- 0 577 496
- WO-A-99/29555
- DE-A1- 4 438 567
- GB-A- 1 176 517
- GB-A- 2 162 801
- GB-A- 2 290 269
- US-A- 4 412 689

## Description

### 1. Domaine de l'invention

Le domaine de l'invention est celui de la puériculture, et en particulier des voitures d'enfant, ou poussettes, pliantes. Plus précisément, l'invention concerne le pliage de telles voitures d'enfant.

### 2. Solutions de l'art antérieur

On connaît de nombreuses techniques de pliage de châssis de poussette. D'une façon générale, on cherche notamment à concilier au moins certains des objectifs suivants :
- efficacité du pliage, l'encombrement de la poussette pliée devant être le plus réduit possible, de façon à faciliter son rangement, et son transport, par exemple dans un véhicule automobile ;
- simplicité des manipulations de pliage et dépliage, l'utilisateur devant pouvoir effectuer ces opérations le plus facilement possible :

- solidité et sécurité de l'enfant transporté ;
- simplicité et faible coût de la fabrication.

Parmi les différents types de châssis connus, il existe une catégorie dite à pliage cassé. Selon cette technique, les bras poussoirs se trouvent, en position dépliée, sensiblement dans le prolongement des piétements avant, et basculent par rapport à ces derniers lors du pliage. Le plus souvent, le basculement des bras poussoirs se fait vers le bas, l'extrémité supérieure des bras poussoirs se rapprochant des roues arrière.

On connaît également des techniques selon lesquelles les bras poussoirs basculent vers le haut, de façon que l'extrémité supérieure du bras poussoir se rapproche des roues avant. Une telle technique a notamment été développée par le titulaire de la présente demande de brevet pour les poussettes dites « tout terrain », qui sont munies de roues de grande taille (par rapport aux poussettes classiques), équipés le plus souvent de pneus gonflables.

Selon une autre technique connue, chaque bras poussoir peut coulisser parallèlement au brancard avant entre une position déployée où le bras poussoir prolonge sensiblement le brancard avant et une position repliée où le bras poussoir et le brancard avant correspondant sont disposés côte à côte. Chaque brancard arrière est articulé au voisinage de son extrémité supérieure sur le brancard avant correspondant.

On connaît encore une autre technique selon laquelle le châssis est conçu pour autoriser un pliage en « fagot » de la poussette. Un tel pliage en fagot consiste à permettre le rapprochement des piètements des brancards de façon à réduire l'encombrement en largeur de la poussette une fois pliée. Cette technique peut être combinée avec certaines des techniques citées précédemment.

DE 4 438 567, qui représente l'état de la technique le plus proche, divulgue une poussette pliante avec tous les caractéristiques du préambule de la revendication 1.

Du GB 2 162 801 est connue aussi une poussette pliante avec brancard avant, brancard arrière et poussoir, et une biellette reliant le poussoir au brancard arrière et des moyens de guidage en coulissement du poussoir par rapport du brancard avant.

L'invention concerne plus particulièrement ces voitures d'enfant dont les piètements se rapprochent l'un de l'autre lors du pliage.

Selon cette approche, le pliage est généralement obtenu, après déverrouillage d'un ou plusieurs éléments de verrouillage assurant le blocage en position dépliée de la poussette, de façon à éviter tout incident avec un enfant présent dans cette dernière, en soulevant et/ou en redressant la poussette, par un élément du guidon ou par une poignée prévue à cet effet au voisinage du guidon (le guidon pouvant être formé par un élément unique ou par deux poignées indépendantes, selon les cas).

Cette opération peut être relativement difficile, notamment pour des personnes de petite taille. La réduction de la largeur du châssis (lorsque les piètements se rapprochent l'un de l'autre) induit en effet généralement une augmentation de sa longueur, c'est-à-dire en l'occurrence de sa hauteur.

Le poids de la poussette, bien que l'on vise toujours à le réduire, peut également rendre cette opération difficile (il est par exemple peu aisé de soulever la poussette d'une main, alors qu'on soutient l'enfant de l'autre main).

Tout cela se constate souvent de façon de plus en plus importante au fur et à mesure que la poussette vieillit, du fait de l'usure, de l'encrassement, de l'apparition de jeux ou de points de blocage entre des pièces en mouvement.

On constate donc que le pliage des poussettes est souvent, en pratique, peu aisé. Cela est souvent renforcé par des problèmes de coulissement des tubes, guidés l'un à côté de l'autre par des pièces plastiques.

En outre, les différents moyens permettant le pliage et le dépliage sont relativement complexes, et souvent peu aisés à assembler et à régler.

De plus, il est aujourd'hui difficile de diminuer l'encombrement, en position pliée, de telles poussettes : l'ensemble des pièces sont en effet en contact, ou pratiquement en contact.

### 3. Objectifs de l'invention

L'invention a notamment pour objectif de pallier ces différents inconvénients de l'art antérieur.

Plus précisément, l'invention a pour objectif de proposer une voiture d'enfant dont le pliage est amélioré, et donc la compacité en position pliée est réduite.

L'invention a également pour objectif de fournir une telle voiture d'enfant, ou poussette, qui reste simple à fabriquer, à monter et à mettre en oeuvre.

L'invention a également pour objectif d'offrir une nouvelle esthétique de poussette.

### 4. Résumé de l'invention

Ces objectifs, ainsi que d'autres qui apparaîtront par la suite, sont atteints à l'aide d'une poussette pliante, comprenant un châssis présentant deux brancards avant et deux brancards arrière à l'extrémité inférieure de chacun desquels est monté un bloc d'au moins une roue, et deux poussoirs s'étendant, en position dépliée, dans le prolongement du châssis et des moyens de guidage en coulissement du poussoir correspondant à l'intérieur du brancard avant.

Selon l'invention, chacun des brancards avant présente :
- une ouverture de guidage en coulissement de l'extrémité d'une biellette reliant le poussoir au brancard arrière.

Ces brancards avant permettent ainsi un pliage plus compact et facile de la poussette. L'ouverture peut se présenter, par exemple, sous la forme d'une fente ou d'un rail.

Selon un mode de réalisation avantageux de l'invention, la section intérieure du brancard avant comprend deux portions :
- une portion de guidage du poussoir, ajustée de façon à coïncider avec la section extérieure du poussoir ;
- une portion décalée par rapport à ladite portion de guidage, dans laquelle est formée l'ouverture.

Cette portion décalée permet notamment la présence d'une ouverture ou d'un rail de forme complexe, ou de vis, sans gêner le coulissement du poussoir.

Avantageusement, la portion décalée comprend au moins une excroissance s'étendant vers la portion de guidage, de façon à former une zone d'appui pour le poussoir.

Le poussoir est ainsi bien maintenu sans que les surfaces de frottement soient trop importantes.

Selon un mode de réalisation préférentiel de l'invention, au moins une des excroissances est destinée à recevoir des moyens de fixation d'une pièce rapportée sur le brancard avant.

Préférentiellement, chaque brancard avant présente deux excroissances réparties de part et d'autre d'une fente longitudinale formant l'ouverture.

Selon un mode de réalisation avantageux, les brancards avant sont des profilés métalliques.

Préférentiellement, chacun des brancards avant porte au moins une bague de maintien et/ou de rigidification.

Ces bagues permettent de limiter la perte de rigidité du brancard avant causée par la fente.

Avantageusement, chacun des brancards avant porte, en sa partie supérieure, une pièce de liaison assurant au moins une des fonctions suivantes :
- articulation avec le brancard arrière ;
- guidage du poussoir ;
- verrouillage du châssis en position dépliée ;

Selon un mode de réalisation préférentiel de l'invention, l'ouverture est associée à des moyens de verrouillage et/ou à au moins une butée.

Ces moyens de verrouillage permettent de verrouiller la poussette en position ouverte.

Préférentiellement, une pièce assurant la solidarisation d'un support d'enfant au châssis est montée coulissante sur le brancard avant.

Cette pièce, et le support d'enfant qui lui est associé, peuvent ainsi se déplacer le long du brancard avant lors du pliage, et ainsi permettre un pliage plus compact.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente une vue de côté d'un châssis de poussette selon un mode de réalisation de l'invention en position ouverte ;
- la figure 2 présente une vue de coté du châssis de poussette de la figure 1 en position pliée ;
- la figure 3 présente une vue de derrière partielle du châssis de poussette de la figure 1 en position pliée ;
- la figure 4 représente une section d'un brancard avant de la poussette de la figure 1 et du poussoir qui lui est associé.
- la figure 5 est une vue en perspective d'un des cotés du châssis de poussette de la figure 1 en position ouverte.
- la figure 6 présente une vue de face partielle de la poussette de la figure 1 en position ouverte ;
- La figure 7 présente une section d'un brancard avant de poussette selon un autre mode de réalisation de l'invention.

### 6. Description détaillée de l'invention

### 6.1 Rappel du principe de l'invention

L'invention propose donc une poussette dont le brancard avant dans lequel coulisse le poussoir comporte une fente permettant le guidage d'une biellette qui est liée au poussoir mais se déplace en dehors du brancard avant. On obtient ainsi une synergie de la mise en oeuvre de la cinématique, autour du brancard avant, ce qui permet de réduire l'encombrement en position pliée, ainsi que le poids, et de simplifier le montage et la mise en oeuvre.

### 6.2 Description d'un mode de réalisation

### La poussette

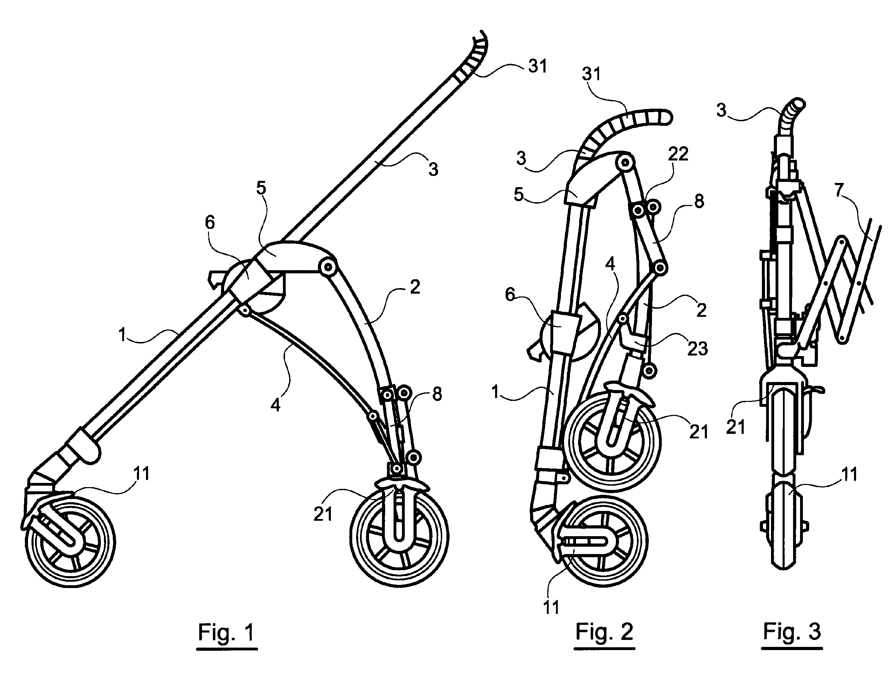

Le châssis d'un exemple de poussette selon un mode de réalisation de l'invention est représentée en position déployée sur la figure 1. Ce châssis comporte deux brancards, ou piétements, avant 1 et deux brancards, ou piétements arrière 2.

Des roues avant 11 (ou des blocs de roue) sont montés à l'extrémité inférieure des brancards avant 1 et des roues arrière 21 (ou des blocs de roue) sont montés à l'extrémité inférieure des brancards arrière 2. L'extrémité supérieure de chaque brancard avant 1 est liée à l'extrémité supérieure d'un brancard arrière 2 par un pièce charnière 5. Cette pièce charnière 5 permet une rotation du brancard avant 1 par rapport au brancard arrière 2.

Le châssis comporte également deux poussoirs 3 s'étendant respectivement, en position dépliée, dans le prolongement des deux brancards avant 1. La partie supérieure de ces poussoirs 3 est munie de poignées. Ces poignées peuvent être reliées ou non, selon le cas.

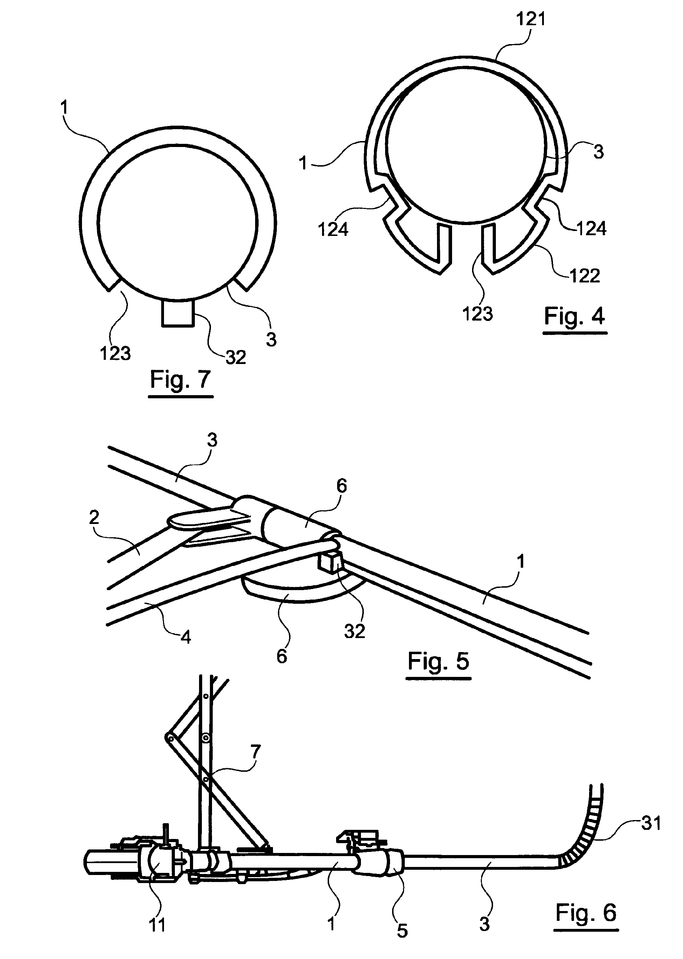

Une première biellette 4 relie l'extrémité inférieure de chaque poussoir 3 avec le brancard arrière 2 qui se trouve du même côté. Comme l'illustrent les figures 3 et 6, qui montrent une vue partielle de l'arrière de la poussette respectivement en position pliée et déployée, un ensemble de croisillons 7 relie les deux brancards arrière 2.

### Le pliage

Pour plier la poussette selon le mode de réalisation de l'invention représenté sur les figures 1 à 6, l'utilisateur doit, après avoir déverrouillé des verrouillages de sécurité (non représentés), pousser sur les deux poussoirs 3. Des moyens de déverrouillage peuvent être prévus au niveau des poignées ou d'un guidon, et agir par l'intermédiaire de câbles sur des pions de verrouillage. Ces poussoirs 3 s'enfoncent alors dans les brancards avant 1.

Une pièce coulissante 32 est solidarisée à l'extrémité inférieure de chaque poussoirs 3. Une partie interne de cette pièce coulissante 32 coulisse donc à l'intérieur du brancard avant 1. Une autre partie externe de cette pièce coulissante 32 est située à l'extérieur du brancard avant 1. Une extrémité de chaque première biellette 4 est liée par une liaison pivot à cette partie extérieure de la pièce coulissante 32, et coulisse le long du brancard avant 1, en accompagnant l'extrémité inférieure du poussoir 3.

La première biellette 4 est liée par une liaison pivot à une pièce de liaison 23 qui est solidaire du bas du brancard arrière 2.

Lors de l'opération de pliage, la première biellette 4 se déplace donc d'une position sensiblement perpendiculaire au brancard avant 1, représentée sur la Figure 1, vers une position représentée sur la figure 2 dans laquelle elle présente un angle faible avec ce brancard avant 1. Ce déplacement entraîne le rapprochement du brancard arrière 2 et du brancard avant 1, par pivotement autour de la pièce charnière 5.

La première biellette 4 se prolonge derrière la liaison avec la pièce de liaison 23, et sa deuxième extrémité est liée par une liaison pivot à la première extrémité d'une seconde biellette 8.

La seconde extrémité de cette seconde biellette 8 est liée par une liaison pivot à une bague glissante 22 qui coulisse le long du brancard arrière 2.

L'ensemble de croisillons 7 est lié aux bagues glissantes 22 et aux blocs de roues arrières 21. Les bagues glissantes 22, en s'éloignant des blocs de roues 21, agissent sur l'ensemble de croisillons 7 de manière à rapprocher les brancards droits et gauches de la poussette.

En position repliée, représenté sur la figure 2, la poussette présente donc les brancards arrière 2 ramenés contre les brancards avant 1, les brancards de droite et de gauche rapprochés, et les poussoirs 3 enfoncés dans les brancards avant. Elle est donc particulièrement compacte.

### La structure du brancard avant.

La structure du brancard avant 1 permet un coulissement du poussoir 3 dans celui-ci. Il guide également une pièce coulissante 32 dont une partie est liée à l'extrémité du poussoir 3, à l'intérieur du brancard 1, et une autre partie est liée par une liaison pivot à l'extrémité de la biellette 4, à l'extérieur du brancard avant 1. Ce brancard avant 1 comporte donc une ouverture, ou rail ou fente 123, ouverte sur une grande longueur, par laquelle coulisse cette pièce coulissante 32.

Cette fente 123 peut entraîner des difficultés de mise en oeuvre du brancard, pour plusieurs raisons. D'une part, la fente diminue la rigidité de ce brancard avant 1. En particulier, elle le rend plus sensible au flambage. D'autre part, cette fente permet à la poussière de pénétrer dans le brancard avant 1, ce qui peut gêner le coulissement du poussoir dans le brancard.

Une structure particulière du brancard avant de l'invention permet de résoudre ces problèmes.

Le glissement du poussoir 3 dans le brancard avant 1 (appelé glissement « tube dans tube ») ne cause en effet des frottements que sur certaines portions du périmètre du poussoir.

Sur une portion 121, le poussoir 3 coulisse contre une portion du brancard de forme circulaire ayant un rayon supérieur à celui du poussoir. Ce glissement cause donc peu de frottements.

Le brancard 1 présente des excroissances 124 contre lesquelles coulisse le poussoir 3. Les faibles dimensions des surfaces en contact de ces excroissances 124 entraînent là encore un faible frottement. Les bords de la fente 123 participent également au guidage du poussoir 3 tout en présentant une faible surface de frottement.

Le poussoir est donc bien maintenu dans le brancard sans que les surfaces de frottement soient trop importantes. L'incidence de la présence de poussière est donc limitée.

De plus, la portion décalée du brancard avant avec les plis formés par les excroissances et les bords de la fente 123 permettent d'améliorer la rigidité et la tenue au flambage de ce brancard avant.

Il est cependant important que les deux extrémités du brancard 1 soient solidement maintenues. La pièce charnière 5, à l'extrémité supérieure, et le bloc roue 11, à l'extrémité inférieure, permettent ce maintien. Ces deux pièces possèdent pour cela des ouvertures de forme complémentaire à celle du brancard avant.

La présence dans le brancard avant de portions décalées 122 permet de réaliser des assemblages par vissage sur cette partie sans gêner le coulissement des poussoirs dans le brancard, notamment au niveau de la pièce charnière 5.

Le brancard avant est, avantageusement, réalisé en profilé métallique, par exemple en profilé d'aluminium.

### La pièce de solidarisation du support d'enfant.

Une pièce de solidarisation 6 sert à fixer un support d'enfant, par exemple un hamac ou une nacelle. Cette pièce de solidarisation 6 est montée coulissante sur le brancard avant.

Les excroissances 124 et le rail 123, et plus généralement la forme non circulaire du brancard avant 1, lui permettent d'être fixe en rotation. En position dépliée de la poussette, cette pièce de solidarisation 6 est maintenue en haut du brancard avant 1, contre la pièce charnière 5, par la pièce coulissante 32 liée à l'extrémité de la biellette 4.

Lors du pliage, cette pièce coulissante 32 coulisse en suivant le mouvement de l'extrémité inférieure du poussoir. La pièce de solidarisation 6 coulisse également, sous l'effet de la gravité, le long du brancard avant 1, en suivant la pièce coulissante 32. Elle est ensuite bloquée par une butée, situé environ à la moitié du brancard avant 1, alors que la pièce coulissante 32 poursuit son coulissement jusqu'au bloc roue 11.

Lors du dépliage, la pièce coulissante 32 coulisse le long du brancard avant 1 en remontant depuis le bloc roue 11. Environ au milieu du brancard avant, elle vient en butée contre la pièce de solidarisation 6. La pièce coulissante 32 entraîne alors la pièce de solidarisation 6 jusqu'à venir en butée contre la pièce charnière 5.

Un système de verrouillage permet le verrouillage de la pièce coulissante 32 dans cette position déployée.

### Autres caractéristiques et avantages

Le mode de réalisation de l'invention qui est illustré par les figures 1 à 6 correspond à une poussette à pliage en trois dimensions, dont, en position pliée, les côtés droits et gauches sont rapprochés. Bien entendu, l'invention s'applique également aux poussettes à pliage dit « à plat », pour lesquelles le pliage ne se fait que dans deux dimensions.

Par ailleurs, bien que sur la figure 4, l'ouverture 123 soit représentée sous la forme d'une fente, des ouvertures de formes différentes peuvent bien évidemment être utilisées. En particulier, cette ouverture peut être plus large, comme illustré en figure 7, ou avoir une forme différente, ou encore ne pas être linéaire le long du brancard avant. Cette fente a notamment pour rôle d'empêcher, ou de limiter, la rotation du poussoir dans le brancard avant.

## Revendications

1. Poussette pliante, comprenant un châssis présentant deux brancards avant (1) et deux brancards arrière (2) à l'extrémité inférieure de chacun desquels est monté un bloc d'au moins une roue (11, 21), et deux poussoirs (3) s'étendant, en position dépliée, dans le prolongement dudit châssis, et des moyens de guidage en coulissement dudit poussoir (3) correspondant à l'intérieur dudit brancard avant (1),
**caractérisée en ce que** chacun desdits brancards avant (1) présente :
- une ouverture (123) de guidage en coulissement de l'extrémité d'une biellette (4) reliant ledit poussoir (3) audit brancard arrière (2).

2. Poussette selon la revendication 1, **caractérisée en ce que** la section intérieure dudit brancard avant (1) comprend deux portions :
- une portion de guidage (121) dudit poussoir, ajustée de façon à coïncider avec la section extérieure dudit poussoir ;
- une portion décalée (122) par rapport à ladite portion de guidage, dans laquelle est formée ladite ouverture (123).

3. Poussette selon la revendication 2, **caractérisée en ce que** ladite portion décalée (122) comprend au moins une excroissance (124) s'étendant vers ladite portion de guidage, de façon à former une zone d'appui pour ledit poussoir (3).

4. Poussette selon la revendication 3, **caractérisée en ce qu'**au moins une desdites excroissances (124) est destinée à recevoir des moyens de fixation d'une pièce rapportée sur ledit brancard avant.

5. Poussette selon l'une quelconque des revendications 3 et 4, **caractérisée en ce que** chaque brancard avant (1) présente deux excroissances (124) réparties de part et d'autre d'une fente longitudinale formant ladite ouverture (123).

6. Poussette selon l'une quelconque des revendications 1 à 5, **caractérisée en ce que** lesdits brancards avant sont des profilés métalliques.

7. Poussette selon l'une quelconque des revendications 1 à 6, **caractérisée en ce que** chacun desdits brancards avant (1) porte au moins une bague de maintien et/ou de rigidification.

8. Poussette selon l'une quelconque des revendications 1 à 7, **caractérisée en ce que** chacun desdits brancards avant (1) porte, en sa partie supérieure, une pièce de liaison (5) assurant au moins une des fonctions suivantes :
- articulation avec ledit brancard arrière ;
- guidage dudit poussoir ;
- verrouillage dudit châssis en position dépliée ;

9. Poussette selon l'une quelconque des revendications 1 à 8, **caractérisée en ce que** ladite ouverture (123) est associée à des moyens de verrouillage et/ou à au moins une butée.

10. Poussette selon l'une quelconque des revendications 1 à 9, **caractérisée en ce qu'**une pièce assurant la solidarisation d'un support d'enfant au châssis est montée coulissante sur ledit brancard avant.

## Claims

1. Folding pushchair, comprising a frame having two front shafts (1) and two rear shafts (2) - at the lower end of each of which is fitted a block of at least one wheel (11 and 21) - and two pushing members (3) running, in the unfolded position, as an extension of the said frame and means of sliding guidance of the said pushing member (3) corresponding to the inside of the said front shaft (1), **characterized in that** each of the said front shafts (1) has:
- an opening (123) for sliding guidance of the end of a connecting rod (4) linking the said pushing member (3) to the said rear shaft (2).

2. Pushchair according to Claim 1, **characterized in that** the internal section of the said front shaft (1) comprises two portions:
- a portion (121) for guiding the said pushing member, adjusted so as to coincide with the external section of the said pushing member and
- a portion (122) offset with respect to the said guiding portion, in which the said opening (123) is formed.

3. Pushchair according to Claim 2. **characterized in that** the said offset portion (122) comprises at least one protuberance (124) extending in the direction of the said guiding portion, so as to form a support area for the said pushing member (3).

4. Pushchair according to Claim 3. **characterized in that** at least one of the said protuberances (124) is intended for receiving means for fastening a part attached to the said front shaft.

5. Pushchair according to either of Claims 3 and 4. **characterized in that** each front shaft (1) has two protuberances (124) distributed on either side of a longitudinal slot forming the said opening (123).

6. Pushchair according to any one of Claims I to 5, **characterized in that** the said front shafts are metal sections.

7. Pushchair according to any one of Claims I to 6, **characterized in that** each of the said front shafts (1) carries at least one holding and/or stiffening ring.

8. Pushchair according to any one of Claims 1 to 7, **characterized in that** each of the said front shafts (1) carries, in its upper part, a connecting part (5) performing at least one of the following functions:
- articulation with the said rear shaft,
- guidance of the said pushing member and
- locking of the said frame in the unfolded position.

9. Pushchair according to any one of Claims 1 to 8, **characterized in that** the said opening (123) is associated with means of locking and/or with at least one stop.

10. Pushchair according to any one of Claims 1 to 9, **characterized in that** a part providing the securing of a child seat to the frame is fitted so as to slide on the said front shaft.

## Patentansprüche

1. Faltbarer Kinderwagen umfassend, einen Rahmen mit zwei vorderen Tragstangen (1) und zwei hinteren Tragstangen (2), an deren unterem Ende jeweils ein Block mit mindestens einem Rad (11, 21) angebracht ist, und zwei Schiebestangen (3), die sich in der ausgeklappten Position in der Verlängerung dieses Rahmens erstrecken, und Schiebeführungsmittel für die entsprechende Schiebestange (3) innerhalb der vorderen Tragstange (1),
**dadurch gekennzeichnet, dass** jede der vorderen Tragstangen (1) Folgendes aufweist:
- eine Schiebeführungsöffnung (123) für das Ende einer Strebe (4), die diese Schiebestange (3) mit der hinteren Tragstange verbindet (2).

2. Kinderwagen nach Anspruch 1, **dadurch gekennzeichnet, dass** der innere Bereich der vorderen Tragstange (1) zwei Abschnitte umfasst:
- einen Führungsabschnitt (121) für die Schiebestange, der so eingestellt ist, dass er mit dem äußeren Bereich dieser Schiebestange übereinstimmt;
- einen in Bezug auf diesen Führungsabschnitt versetzten Abschnitt (122), in dem die Öffnung (123) ausgebildet ist.

3. Kinderwagen nach Anspruch 2, **dadurch gekennzeichnet, dass** der versetzte Abschnitt (122) mindestens eine Ausstülpung (124) umfasst, die sich zu diesem Führungsabschnitt hin erstreckt, so dass sie einen Auflagebereich für die Schieberstange (3) bildet.

4. Kinderwagen nach Anspruch 3, **dadurch gekennzeichnet, dass** mindestens eine dieser Ausstülpungen (124) dazu dient, Mittel zur Befestigung eines an die vordere Tragstange angesetzten Teils aufzunehmen.

5. Kinderwagen nach einem der Ansprüche 3 und 4, **dadurch gekennzeichnet, dass** jede vordere Tragstange (1) zwei Ausstülpungen (124) aufweist, die beiderseits eines längs verlaufenden Schlitzes, der die Öffnung (123) bildet, verteilt sind.

6. Kinderwagen nach einem der Ansprüche 1 bis 5, **dadurch gekennzeichnet, dass** die vorderen Tragstangen Metallprofile sind.

7. Kinderwagen nach einem der Ansprüche 1 bis 6, **dadurch gekennzeichnet, dass** jede der vorderen Tragstangen (1) mindestens einen Halte- und/oder Aussteifungsring trägt.

8. Kinderwagen nach einem der Ansprüche 1 bis 7, **dadurch gekennzeichnet, dass** jede der vorderen Tragstangen (1) in ihrem oberen Teil ein Verbindungsteil (5) trägt, das mindestens eine der folgenden Funktionen gewährleistet:
- Anlenken an die hintere Tragstange;
- Führen der Schiebestange;
- Verriegeln des Rahmens in der ausgeklappten Position.

9. Kinderwagen nach einem der Ansprüche 1 bis 8, **dadurch gekennzeichnet, dass** die Öffnung (123) mit Verriegelungsmitteln und/oder mindestens einem Anschlag kombiniert ist.

10. Kinderwagen nach einem der Ansprüche 1 bis 9, **dadurch gekennzeichnet, dass** ein Teil, das die Befestigung einer Kindertragvorrichtung am Rahmen gewährleistet, verschiebbar an der vorderen Tragstange angebracht ist.
